# EUROPEAN PATENT APPLICATION

(11) **EP 1 677 026 A1**
(43) Date of publication of application: **05.07.2006**
(21) Application number: 04792526.8
(22) Date of filing: 18.10.2004
(51) Int. Cl.: F16F 9/32

(54) **HYDRAULIC SHOCK-ABSORBING DEVICE FOR VEHICLE**

(30) Priority: 20.10.2003 JP 2003359804
(71) Applicant: YAMAHA HATSUDOKI KABUSHIKI KAISHA, Iwata-shi, Shizuoka 438-8501 (JP)
(72) Inventor: TANAKA, A., c/o Yamaha Hatsudoki Kabushiki Kaisha, Iwata-shi, Shizuoka 438-8501 (JP)
(74) Representative: Grünecker, Kinkeldey, Stockmair & Schwanhäusser Anwaltssozietät
(86) International application number: PCT/JP2004/015357
(87) International publication number: WO 2005/038289

(57) **Abstract**

A hydraulic shock-absorbing device has a small diameter cylinder body (21) and a large diameter cylinder body (22) that have a first oil chamber (44) and a second oil chamber (45) that are communicated with oil chambers of hydraulic shock absorbers attached as a pair to a vehicle body. A free piston (23) is insened in both cylinder bodies so that variations of volumes of the first oil chamber (44) and the second oil chamber (45) always have a constant ratio. The first oil chamber (44) and the second oil chamber (45) are communicated through a third restriction (56). An opening/closing valve (30) opened and closed by a solenoid (32), and in addition, a first and a second restriction (29, 31) are arranged in series in a bypass path (52) connecting both oil chambers. The smell diameter cylinder (21) is formed by casting using a metal mold that is split in the radial direction. An installation section (24) for a solenoid, hydraulic pipe installation sections (13, 15), and installationbosses (25. 26) are arranged on a split surface of the metal mold.

## Description

### Technical Field

The present invention relates to a hydraulic shock absorber system for a vehicle using shock absorbers for vehicle suspension that are provided in a pair to a vehicle such as an automobile, the hydraulic shock absorber system being adapted to relatively increase the damping force in the case where the operations of these hydraulic shock absorbers are different from each other.

### Background Art

An example of a conventional hydraulic shock absorber system of this type is disclosed in, for example, JP-A-Hei 8-132846. The hydraulic shock absorber system disclosed therein includes a first hydraulic shock absorber and a second hydraulic shock absorber that are provided in a pair to the vehicle body of an automobile, and an intermediate unit connected to these hydraulic shock absorbers.

The intermediate unit is composed of a first pressure-regulating cylinder having a first oil chamber communicated with an oil chamber of the first hydraulic shock absorber, a second pressure-regulating cylinder having a second oil chamber communicated with an oil chamber of the second hydraulic shock absorber, a free piston inserted in both the pressure-regulating cylinders, and a high pressure gas chamber formed on the side opposite to the first and second oil chambers with the free piston therebetween, a stationary throttle and a movable throttle that are provided in a communication passage communicating between the first oil chamber and the second oil chamber, and the like. The first pressure-regulating cylinder and the second pressure-regulating cylinder, one of which is formed to be larger than the other in inner diameter, are arranged coaxially with each other. The free piston is formed such that changes in the volumes of the first and second oil chambers occurring as the free piston moves are at a fixed ratio at all times.

In the conventional hydraulic shock absorber system constructed as described above, when, for example, the first hydraulic shock absorber and the second hydraulic shock absorber operate in opposite directions, and a pressure difference occurs between the first oil chamber and the second oil chamber, a damping force is generated in the intermediate unit by a hydraulic fluid passing through at least one of the stationary throttle and the movable throttle . On the other hand, when the operating directions of the first and the second hydraulic shock absorbers are the same and the ratio of the operating amounts between the first and the second hydraulic shock absorbers is identical to the ratio of change in the volume of the first and the second oil chambers (which is always contant), no pressure difference occurs between the first and the second oil chambers and therefore, no hydraulic fluid passes through the two throttles. Thus, no damping force is generated in the intermediate unit.

Accordingly, in the conventional hydraulic shock absorber system as described above, by providing the first and second hydraulic shock absorbers on, for example, the left and right sides of the vehicle body, damping force is generated by the first and second hydraulic shock absorbers and the intermediate unit at the time of rolling. Further, in the hydraulic shock absorber system, damping force is generated only in the first and second hydraulic shock absorbers at times other than during the rolling, such as during bouncing. That is, in the hydraulic shock absorber system, a relatively large damping force is generated during cornering, whereas the damping force becomes relatively small during the bouncing or the like.

The stationary throttle is composed of check valves including valve members consisting of disc-shaped leaf springs. There are provided two kinds of check valves, one permitting the flow of hydraulic fluid from the first oil chamber to the second oil chamber, and the other permitting the flow of hydraulic fluid from the second oil chamber to the first oil chamber.
The movable throttle is composed of a spool valve interposed between the first oil chamber and the second oil chamber so as to be in parallel with the stationary throttle.

The spool valve is formed such that a spool is pressed from one side by the resultant force of the pressing force exerted by a solenoid and the elastic force of a first compression coil spring, and is pressed from the other side by the elastic force of a second compression coil spring. Further, the spool valve is constructed such that by switching between the energized and non-energized states of the solenoid, the spool moves in the axial direction, thereby opening and closing a hydraulic fluid passage.

According to this spool valve, by varying the amount of current passed through the solenoid, the spool moves to a position where the resultant force of the force exerted by the solenoid and the elastic force of the first compression coil spring, and the elastic force of the second compression coil spring are in balance with each other, thereby making it possible to adjust the sectional area of the passage through which the hydraulic fluid flows. That is, upon energization, the spool moves until it reaches a position where the thrust of the solenoid and the reaction force of an equalizer spring are in balance with each other.

Accordingly, in the conventional hydraulic shock absorber system as described above, the resistance encountered when the hydraulic fluid flows is increased/decreased by varying the amount of current passed through the solenoid and varying the passage sectional area of the movable throttle, whereby the magnitude of the damping force, which is generated with respect to the difference in piston speed between the first hydraulic shock absorber and the second hydraulic shock absorber, can be adjusted from the outside.

### Disclosure of the Invention

### Problem to be Solved by the Invention

In the hydraulic shock absorber system for a vehicle constructed as described above, a damping force adjusting mechanism composed of the spool valve and the solenoid is provided to the intermediate unit. Accordingly, there is a problem in that the intermediate unit becomes complicated in structure and also increases in size, causing an increase in manufacturing cost.

The present invention has been made to overcome the above-mentioned problems, and accordingly it is an object of the present invention to achieve a further reduction in the size and cost of an intermediate unit while adopting a structure capable of adjusting the magnitude of a damping force.

### Means for Solving the Problem

According to the present invention, there is provided a hydraulic shock absorber system for a vehicle, in which a small-diameter cylinder body and a large-diameter cylinder body are connected to each other so that their respective cylinder bores become coaxial with each other, a small-diameter piston and a large-diameter piston are located inside the respective cylinder bores, the small-diameter piston and the large-diameter piston are formed integrally so as to be operatively coupled to each other to form a free piston, a first oil chamber, a second oil chamber, and a high pressure gas chamber are respectively defined on one side of the small-diameter piston inside the cylinder bore of the small-diameter cylinder, between the small-diameter piston and the large-diameter piston, and on the other side of the large-diameter piston, changes in volume of the first oil chamber and of the second oil chamber in accordance with movement of the free piston are made to be at a fixed ratio at all times, the first oil chamber and the second oil chamber are communicated with each other by a throttle provided in the small-diameter piston, the first oil chamber is communicated with an oil chamber of one of a pair of hydraulic shock absorbers provided to a vehicle body, and the second oil chamber is communicated with an oil chamber of the other of the shock absorbers, wherein: a bypass passage communicating between the first oil chamber and the second oil chamber is provided in the small-diameter cylinder body; an on/off valve, which is opened and closed by a solenoid, and a throttle are provided in series in the bypass passage; the small-diameter cylinder body is formed by a casting mold that is subjected to mold release in a radial direction thereof; and in the small-diameter cylinder body, a solenoid mounting portion for mounting the solenoid, a hydraulic oil pipe mounting portion for mounting a hydraulic oil pipe that connects the first oil chamber and the second oil chamber to the hydraulic shock absorbers, and a boss for mounting the small-diameter cylinder body on a vehicle frame side are arranged on a parting plane of the casting mold.

In a hydraulic shock absorber system for a vehicle according to the invention as described in Claim 2, in the hydraulic shock absorber system for a vehicle according to the invention as described in Claim 1, a plurality of the throttles are provided in series in the bypass passage.
In a hydraulic shock absorber system for a vehicle according to the invention as described in Claim 3, in the hydraulic shock absorber system for a vehicle according to the invention as described in Claim 1, the throttle is formed by a hole that is opened and closed by a valve member of the on/off valve.

In a hydraulic shock absorber system for a vehicle according to the invention as described in Claim 4, in the hydraulic shock absorber system for a vehicle according to the invention as described in Claim 1, the solenoid mounting portion protrudes from the small-diameter cylinder body in a shape of a bottomed cylinder of a small height, and has a valve seat and a throttle that are provided on a bottom wall thereof, and one end portion of the solenoid is mounted to the solenoid mounting portion.

In a hydraulic shock absorber system for a vehicle according to the invention as described in Claim 5, in the hydraulic shock absorber system for a vehicle according to the invention as described in Claim 1, the solenoid is slanted with respect to an axis of the small-diameter cylinder body.

### Effect of the Invention

As described above, according to the present invention, in the state where the on/off valve is closed, the first oil chamber and the second oil chamber are communicated with each other via one throttle, and by opening the on/off valve, the two oil chambers are communicated with each other via a plurality of throttles, whereby the damping force becomes relatively small. Accordingly, with the hydraulic shock absorber system for a vehicle as described above, the magnitude of the generated damping force can be increased/decreased by switching between the open and closed states of the on/off valve, whereby the damping force can be changed by means of a simple structure as compared with the case where a spool valve is used to adjust the damping force, thereby enabling a reduction in cost.

Further, the projecting portions such as the solenoid mounting portion, the hydraulic oil pipe mounting portions, and the bosses for mounting on the vehicle body frame can be provided to the small-diameter cylinder body by casting, thereby facilitating the manufacture of the small-diameter cylinder body (achieving a reduction in cost). Furthermore, the projecting portions can be arranged on one and the other sides with respect to the radial direction of the small-diameter cylinder body. Accordingly, as compared with the case where the plurality of projecting portions are arranged so as to be, for example, radially scattered in the circumferential direction of the small-diameter cylinder body, the small-diameter cylinder body can be formed compact with respect to the direction in which the casting mold is released.
Accordingly, despite the provision of the mechanism for adjusting the magnitude of the damping force, it is possible to achieve a further reduction in the size and cost of the small-diameter cylinder body.

According to the invention as described in Claim 2, when the hydraulic fluid passes through the bypass passage, the hydraulic fluid repeatedly undergoes expansion and contraction, and thus the pressure loss becomes large as compared with the case where a single throttle is used. Accordingly, a damping force equivalent to that attained when a single throttle with a relatively small bore diameter is used can be generated while using the throttles whose bore diameters are relatively large. Since the manufacturing cost generally becomes higher as the bore diameter becomes smaller, a further reduction in cost can be achieved by adopting the above construction of the present invention.
Further, a damping force of a requisite magnitude can be generated using throttles whose bore diameters are large enough to prevent their clogging with fine foreign matters contained in the hydraulic fluid, whereby a hydraulic shock absorber system with high reliability can be provided.

According to the invention as described in Claim 3, the throttle can be provided integrally with the on/off valve. Accordingly, the number of components can be reduced as compared with the construction in which the throttle is formed as a component separate from the on/off valve, thereby achieving a further reduction in cost.

According to the invention as described in Claim 4, the solenoid can be provided so as to be exposed on the outside of the small-diameter cylinder body. Accordingly, as compared with the construction in which the solenoid is accommodated in the inner portion of the small-diameter cylinder body, a reduction in the size of the small-diameter cylinder body can be achieved, thereby enabling a reduction in the cost of the hydraulic shock absorber system.

According to the invention as described in Claim 5, as compared with the case in which the solenoid projects along the axial direction from one end portion of the small-diameter cylinder body, the size of the solenoid as equipped to the small-diameter cylinder body can be made compact.

### Brief Description of the Drawings

FIG. 1 is a view showing a hydraulic shock absorber system according to the present invention.
FIG. 2 is a front view of an intermediate unit.
FIG. 3 is a sectional view taken along the line III-III of FIG. 4.
FIG. 4 is a longitudinal sectional view of the intermediate unit.
FIG. 5 is an enlarged sectional view showing a valve seat portion of an on/off valve.
FIG. 6 is an enlarged sectional view showing a part of a throttle on the free piston side.
FIG. 7 is an enlarged plan view showing a part of a sheet-like valve member.
FIG. 8 is a graph showing the damping force characteristics of the intermediate unit.
FIG. 9 is a perspective view showing an example of mounting to an automobile.

### Best Mode for Carrying out the Invention

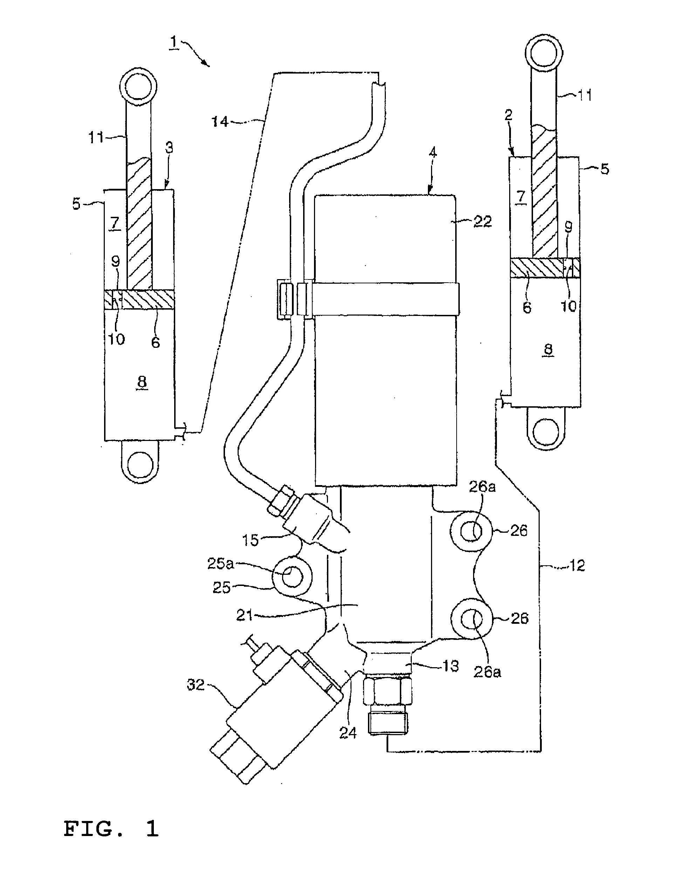

Hereinbelow, an embodiment of a hydraulic shock absorber system for a vehicle according to the present invention will be described in detail with reference to FIGs. 1 through 9.

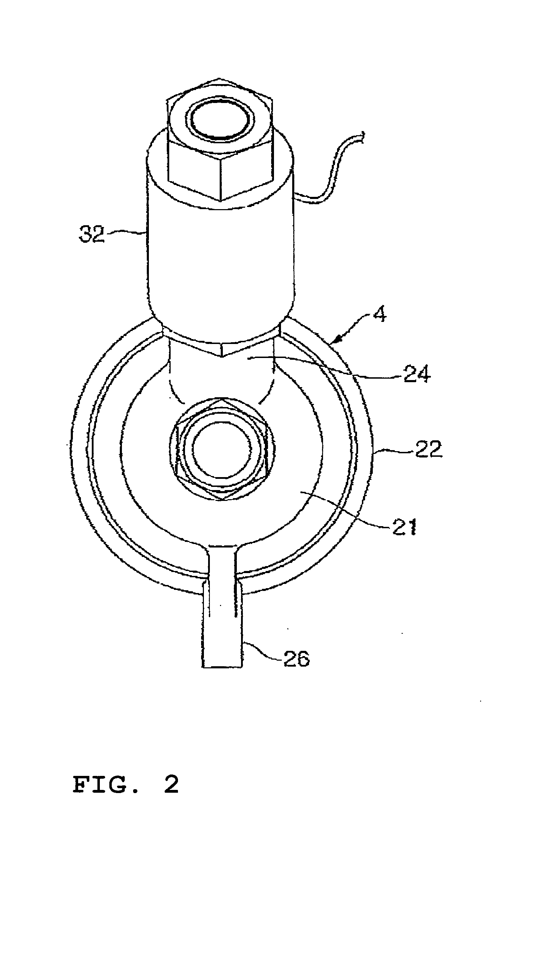

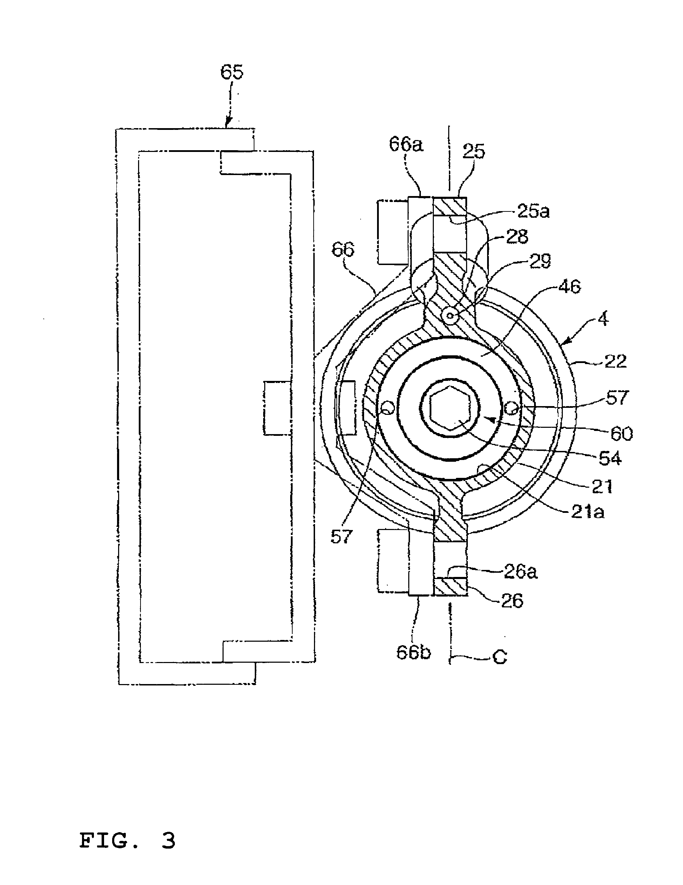

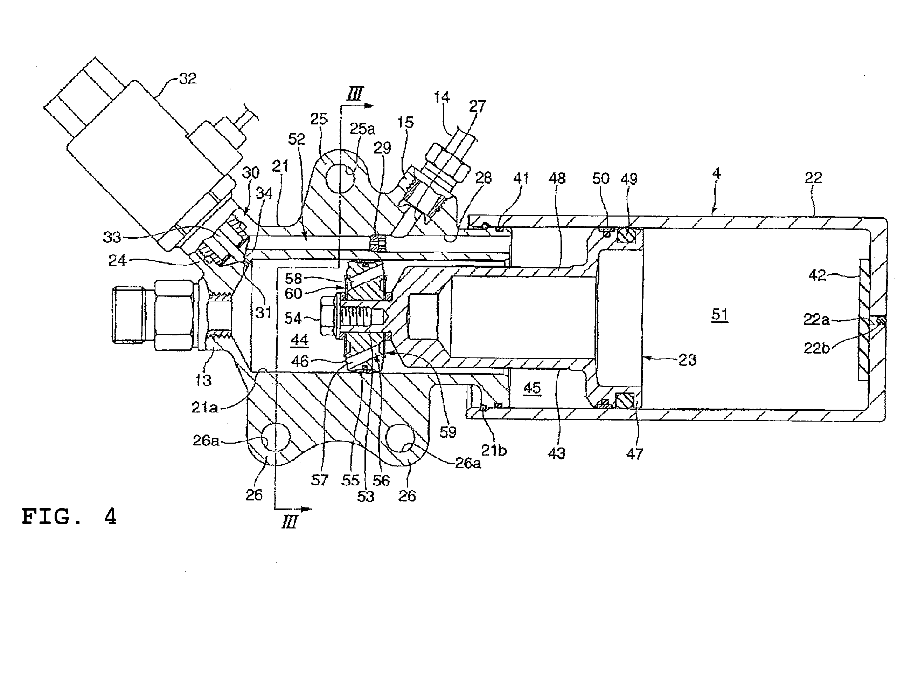

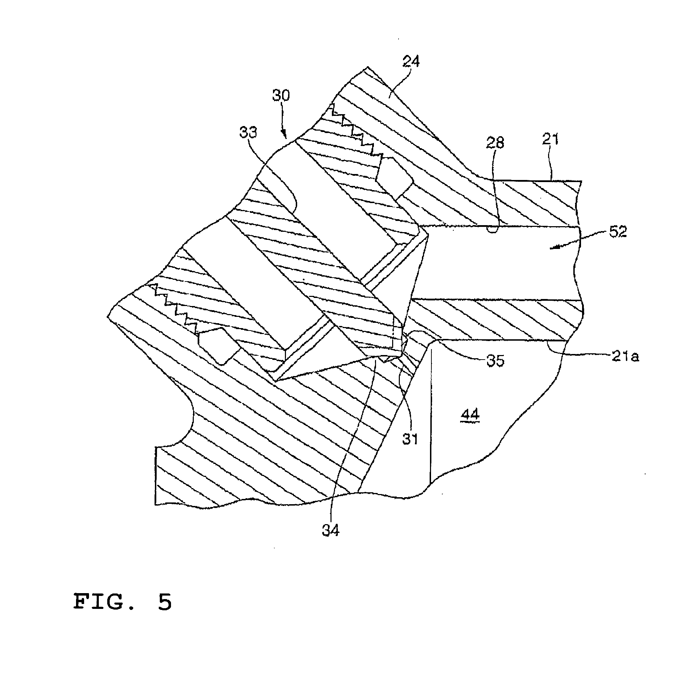

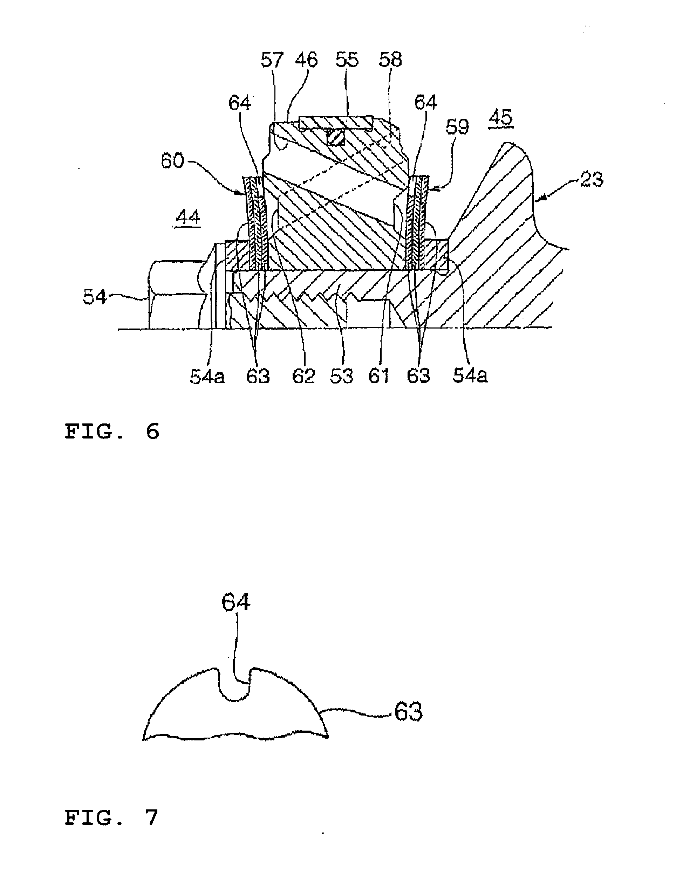

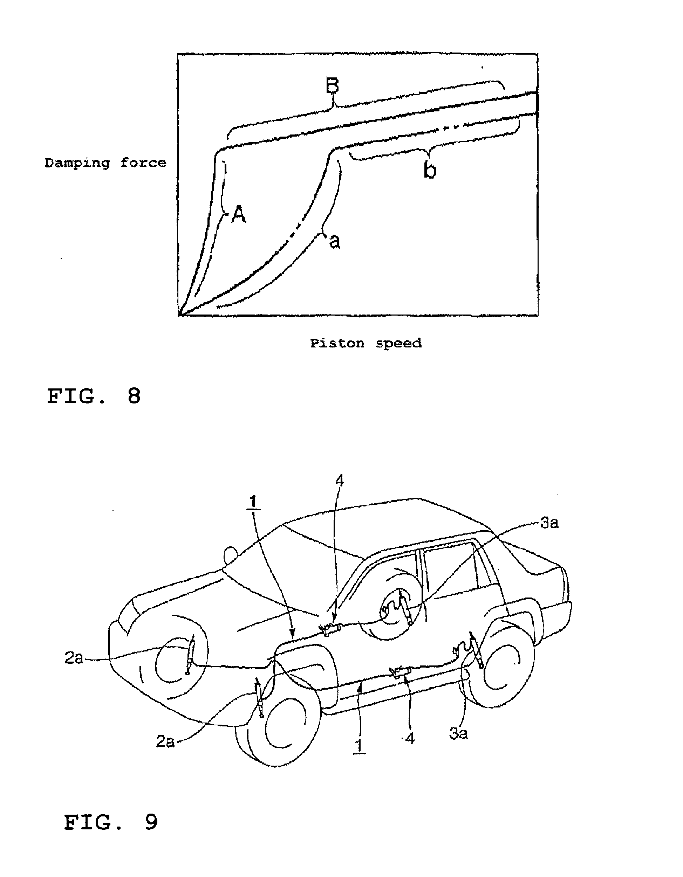

FIG. 1 is a view showing a hydraulic shock absorber system for a vehicle according to the present invention. FIG. 1 illustrates, partly in section, a pair of hydraulic shock absorbers. FIG. 2 is a front view of an intermediate unit, FIG. 3 is a sectional view taken along the line III-III of FIG. 4, FIG. 4 is a longitudinal sectional view of the intermediate unit, FIG. 5 is an enlarged sectional view showing a valve seat portion of an on/off valve, FIG. 6 is an enlarged sectional view showing a part of a throttle on the free piston side, FIG. 7 is an enlarged plan view showing a part of a sheet-like valve member, FIG. 8 is a graph showing the damping force characteristics of the intermediate unit, and FIG. 9 is a perspective view showing an example of mounting to an automobile.

In these figures, reference numeral 1 denotes a hydraulic shock absorber system for front wheels of a vehicle according to this embodiment. The hydraulic shock absorber system 1 is composed of a first hydraulic shock absorber 2, a second hydraulic shock absorber 3, and an intermediate unit 4 connected to the hydraulic shock absorbers 2 and 3.
Each of the first and second hydraulic shock absorbers 2 and 3 has an upper oil chamber 7 and a lower oil chamber 8 defined inside a cylinder main body 5 by means of a piston 6, and the inner portion thereof is filled with a hydraulic fluid. Further, the piston 6 has formed therein a communication passage 9 communicating the upper oil chamber 7 and the lower oil chamber 8 with each other, and is provided with a throttle 10.

The upper end portion of a piston rod 11 of each of the first and second hydraulic shock absorbers 2 and 3 according to this embodiment is fitted on the vehicle body (not shown) of an automobile. Further, the lower end portion of the cylinder body 5 of each of the first and second hydraulic shock absorbers 2 and 3 is pivotally supported on a portion such as a front wheel suspension link (not shown) that vertically moves with respect to the vehicle body. That is, the first and second hydraulic shock absorbers 2 and 3 are interposed between the vehicle body side and the front wheel side. In this embodiment, the first hydraulic shock absorber 2 is arranged on the right side of the vehicle body, and the second hydraulic shock absorber 3 is arranged on the left side of the vehicle body. Of the first and second hydraulic shock absorbers 2 and 3, the lower oil chamber 8 of the hydraulic shock absorber 2 located on the right side (also right side in FIG. 1) of the vehicle body is connected via a hydraulic oil pipe 12 to a first hydraulic oil pipe mounting portion 13 of the intermediate unit 4 that will be described later. The lower oil chamber 8 of the other hydraulic shock absorber 3 is connected via a hydraulic oil pipe 14 to a second hydraulic oil pipe mounting portion 15 of the intermediate unit 4.

As shown in FIG. 4, the intermediate unit 4 is composed of a small-diameter cylinder body 21 to which the first and second hydraulic shock absorbers 2 and 3 are connected, a large-diameter cylinder body 22 mounted to one end portion of the small-diameter cylinder body 21, and a free piston 23 fitted in the inner portions of both the cylinder bodies 21 and 22. The small-diameter cylinder body 21 is subjected to machining such as grinding or drilling after being formed into a predetermined configuration by casting, so that a cylinder bore 21a and other respective portions thereof that will be described later are formed with design accuracy. Although not shown, a casing mold for forming the small-diameter cylinder body 21 is composed of first and second molds panted in the radial direction of the small-diameter cylinder body 21, and a core forming the cylinder bore 21a. The first mold and the second mold are formed such that the parting plane thereof is located at a position indicated by the alternate long and short dash line C in FIG. 3.

As shown in FIGs. 2 to 4, in the small-diameter cylinder body 21, the first and second hydraulic oil pipe mounting portions 13 and 15, and a solenoid mounting portion 24, mounting bosses 25 and 26, and the like, which will be described later, are provided at portions located on the mold parting plane. The cylinder bore 21a is open at one end portion (the right-hand side end portion in FIG. 4) of the small-diameter cylinder body 21 and communicated with the inner portion of the large-diameter cylinder body 22 that will be described later.

The first hydraulic oil pipe mounting portion 13 is formed in a cylindrical configuration and protrudes from the end portion of the small-diameter cylinder body 21 on the side opposite to the large-diameter cylinder body 22 so as to be located coaxially with the cylinder bore 21a. The inner portion of the first hydraulic oil pipe mounting portion 13 is communicated with the inside of the cylinder bore 21a. The second hydraulic oil pipe mounting portion 15 is formed in a cylindrical configuration and protrudes diagonally from the outer portion of the large-diameter cylinder body 22-side end portion of the small-diameter cylinder body 21. The slanting direction of the second hydraulic oil pipe mounting portion 15 is such that it is located progressively toward the large-cylinder body 22 side as it extends outwards in the radial direction of the small-diameter cylinder body 21. As shown in FIG. 4, the inner portion of the second hydraulic oil pipe mounting portion 15 is communicated with a second hydraulic fluid passage 28, which will be described later, via a first hydraulic fluid passage 27.

The second hydraulic fluid passage 28 is open at one face of the small-diameter cylinder body 21 on the large-diameter cylinder body 22 side, and is provided so as to extend through the inside of the small-diameter cylinder body 21 from this opening toward the other end side along the axial direction of the cylinder bore 21a. A first throttle 29 is provided midway through the second hydraulic fluid passage 28 and on the other end side with respect to the connecting portion with the first hydraulic fluid passage 27. The first throttle 29 is mounted by being screwed into the second hydraulic fluid passage 28 from the above opening. Further, the end portion of the second hydraulic fluid passage 28 on the other end side is communicated with the inside of the cylinder bore 21a via an on/off valve 30 and a second throttle 31 that will be described later.

As shown in FIGs. 4 and 5, the on/off valve 30 is constructed such that the solenoid mounting portion 24 formed in the small-diameter cylinder body 21 functions as a valve body, and is driven by a solenoid 32 mounted to the solenoid mounting portion 24. The mounting portion 24 is formed as a bottomed cylinder and provided so as to diagonally protrude from the end portion of the small-diameter cylinder body 21 on the side opposite to the large-diameter cylinder body 22. The slanting direction of the solenoid mounting portion 24 is such that its distance from the large-diameter cylinder body 22 increases gradually as it extends outwards in the radial direction of the small-diameter cylinder body 21.
Further, at the bottom portion of the mounting portion 24, there is formed a valve seat 34 on which a valve member 33 of the on/off valve 30 is seated, and one end of the second hydraulic fluid passage 28 is open.

As shown in FIG. 5, the valve member is formed in a bar-like configuration with a conical distal end portion, and is supported on the solenoid 32 while being located coaxially with the mounting portion 24. The solenoid 32 is connected to a damping force changing switch (not shown). Through operation on the damping force changing switch, the solenoid 32 is changed over between a closed state in which the valve member 33 is seated on the valve seat 34 as shown in FIG. 5 and an open state in which the valve member 33 is separated from the valve seat 34 as indicated by the two-dot chain line in FIG. 5.

The solenoid 32 according to this embodiment has a built-in return spring (not shown) for urging the valve member 33 so as to open. When energized, the solenoid 32 moves the valve member 33 so as to close against the elastic force of the return spring.
The valve seat 34 is formed by a circular recess 35 provided at the bottom of the axial center portion of the mounting portion 24. One end of the second throttle 31 is open at the axial center portion of the circular recess 35. The second throttle 31 according to this embodiment is formed by a small-diameter hole bored in the bottom wall of the mounting portion 24.

As shown in FIG. 3, the mounting bosses 25 and 26 provided in the small-cylinder body 21 are provided at three radial positions (at one upper position and two lower positions in FIG. 3) located on the parting plane of the small-diameter cylinder body 21, and have fixing bolt insertion holes 25a and 26a bored therein, respectively.

The large-diameter cylinder body 22 is formed as a bottomed cylinder. The large-diameter cylinder body 22 is brought into fitting engagement with one end portion of the small-diameter cylinder body 21 while being located coaxially with the cylinder bore 21a, and is fixed in place by means of a circlip 21b. An O-ring 41 is interposed in the fitting engagement portion so as to achieve fluid tightness. The large-diameter cylinder body 22 according to this embodiment has a gas injection hole 22a bored at its bottom portion, and a sheet 42 made of rubber for preventing leakage of gas is adhered onto the bottom portion. After gas injection, the sheet 42 is pushed by the gas injection hole 22a due to the resultant gas pressure. A steel ball 22b is press-fitted into the gas injection hole 22a after the gas injection.
The free piston 23 is composed of a large-diameter piston 43 formed in the shape of a bottomed cylinder, and a small-diameter piston 46. The small-diameter piston 46 is mounted onto the bottom portion (the left-hand side end portion in FIG. 4) of the large-diameter piston 43 and serves to divide the inside of the small-diameter cylinder body 21 into a first oil chamber 44 and a second oil chamber 45.

In the large-diameter piston 43, a piston body 47 located on the opening-side end portion and a bottomed cylindrical portion 48 located on the other end side are formed integrally with each other. The piston body 47 is formed so as to be larger in outer diameter than the bottomed cylindrical portion 48, and an O-ring 49 and a seal ring 50 are fitted onto the outer peripheral portion thereof. The piston body 47 is movably fitted inside the large-diameter cylinder body 22. The inner portion of the large-diameter cylinder body 22 according to this embodiment is divided into a high pressure gas chamber 51 and the second oil chamber 45 by means of the large-diameter piston 43. The high pressure gas chamber 51 is located on the bottom portion side of the large-diameter cylinder body 22 and contains high-pressure N₂ gas.

The second oil chamber 45 is filled with a hydraulic fluid. The second oil chamber 45 is communicated with the second hydraulic oil pipe mounting portion 15 via the second hydraulic fluid passage 28, which is open at one end portion of the small-diameter cylinder body 21, and the first hydraulic fluid passage 27 connected to a midway portion of the second hydraulic fluid passage 28. The other end side of the second hydraulic fluid passage 28, to which the first and second throttles 29 and 31 and the on/off valve 30 are provided as described above, is communicated with the first oil chamber 44. In this embodiment, a passage formed by the second hydraulic fluid passage 28, the first and second throttles 29 and 31, and the on/off valve 30 constitutes a bypass passage 52 according to the present invention. In the bypass passage 52, the first throttle 29 and the second throttle 31 are provided while being arranged in series.

The bottomed cylindrical portion 48 of the large-diameter piston 43 is formed such that its outer diameter is smaller than the inner diameter of the small-diameter cylinder body 21. The end portion of the bottomed cylindrical portion 48 on the side opposite to the piston body 47 is inserted into the small-diameter cylinder body 21. The second oil chamber 45 is thus communicated with the inside of the small-diameter cylinder body 21. Further, a supporting column 51 for mounting the small-diameter piston 46 thereon, which will be described later, protrudes from the end portion of the bottom cylindrical portion 48 on the side opposite to the piston body 47.

The small-diameter piston 46 is fixed onto the supporting column 53 by means of a fixing bolt 54, and is brought into fitting engagement with the small-diameter cylinder body 21 in a movable manner. The first oil chamber 44 partitioned off from the second oil chamber 45 by the small-diameter piston 46 is filled with a hydraulic fluid and communicated with the first hydraulic oil pipe mounting portion 13.

The small-diameter piston 46 according to this embodiment is formed in a disc-like configuration, and a seal ring 55 is fitted on the outer peripheral portion thereof. Further, in this embodiment, the small-diameter piston 46 and the large-diameter piston 43 are formed such that the effective sectional area of the first oil chamber 44 and the effective sectional area of the second oil chamber 45 coincide with each other. That is, the intermediate unit 4 is constructed such that a change in the volume of the small-diameter cylinder body 21 and that of the large-diameter cylinder body 22 are at a fixed ratio at all times.

Further, the small-diameter piston 46 is provided with a third throttle 56 so as to communicate the first oil chamber 44 and the second oil chamber 45 with each other. As shown in FIGs. 4 and 6, the third throttle 56 is composed of a first communication passage 57 and a second communication passage 58 that are formed so as to extend through the small-diameter piston 46, and a first check valve 59 and a second check valve 60 that are interposed in the communication passages 57 and 58, respectively.

The first communication passage 57 and the second communication passage 58 are each provided in two circumferential locations of the small-diameter piston 46. As shown in FIG. 6, one ends thereof are open at outer radial end portions of the small-diameter piston 46, and the other ends thereof are open in annular recesses 61 and 62 formed in opposite end faces of the small-diameter piston 46, respectively. It should be noted that the first communication passage 57 and the second communication passage 58 are depicted as being located on the same plane in FIG. 4, and the first communication passages 57 and the second communication passages 58 are depicted as being located at positions close to each other in FIG. 6. In actuality, however, the first communication passages 57 and the second communication passages 58 are formed at positions shifted by 90° from each other in the circumferential direction of the small-diameter piston 46.

One end of the first communication passage 57 is open at an outer radial end portion of the small-diameter piston 46 located on the first oil chamber 44 side, and the other end thereof is open in the annular recess 61 located on the second oil chamber 45 side. One end of the second communication passage 58 is open at an outer radial end portion of the small-diameter piston 46 located on the second oil chamber 45 side, and the other end thereof is open in the annular recess 62 located on the first oil chamber 44 side.

As shown in FIG. 6, the first and second check valves 59 and 60 are each provided with valve members 63 each consisting of three leaf springs, and open and close the annular recesses 61 and 62, respectively, by means of the valve members 63. The three valve members 63 of the respective check valves are formed in a disc-like configuration so as to be capable of blocking the annular recesses 61 and 62, and are overlapped together while being located coaxially with each other and attached onto the supporting column 53 of the large-diameter piston 43 together with the small-diameter piston 46 through the intermediation of washers 54a. In this embodiment, the first and second check valves 59 and 60 are fastened onto the large-diameter piston 43 by means of the fixing bolt 54 while being sandwiched by the small-diameter piston 46 and the washers 54a.

The first check valve 59 is fitted in place so as to block the annular recess 61 (first communication passage 57), which is located on the second oil chamber 45 side, by an initial set load. The second check valve 60 is fitted in place so as to block the annular recess 62 (second communication passage 58), which is located on the first oil chamber 44 side, by an initial set load. Further, as shown in FIGs . 6 and 7, of the three valve members 63 of the respective check valves, the valve members 63 in contact with the opening portions of the annular recesses 61 and 62 each have a cutout 64 formed in at least one location of its outer peripheral portion, for establishing communication between the annular recesses 61 and 62 and the first and second oil chambers 44 and 45, respectively. The cutout 64 constitutes a part of the third throttle 56. By changing the opening width (width with respect to the circumferential direction of the valve member 63) of the cutout 64, the damping force characteristics prior to opening of the first and second check valves 59 and 60 can be changed.

As shown in FIG. 3, the intermediate unit 4 constructed as described above is mounted to a supporting stay 66 of a vehicle body frame 65. The supporting stay 66 is formed in a V-shaped configuration as seen in the front view of FIG. 3, and has mounting seats 66a and 66b formed at its upper and lower end portions, respectively. Of the mounting seats 66a and 66b, the mounting boss 25 of the intermediate unit 4 is fixed to the upper mounting seat 66a, and the other mounting bosses 26 of the intermediate unit 4 are mounted to the lower mounting seat 66b. That is, in this embodiment, the intermediate unit 4 is mounted to the supporting stay 66 in the state where the axes of the small-diameter cylinder body 21 and of the large-diameter cylinder body 22 become substantially horizontal and the mounting bosses 25 and 26 extend upward and downward, respectively, from the small-diameter cylinder body 21.

In the above-described hydraulic shock absorber system 1 for a vehicle equipped with the intermediate unit 4, when, for example, the right and left hydraulic shock absorbers 2 and 3 are actuated in the same direction by the same amount, the hydraulic fluid passes through the throttle 10 of each of the hydraulic shock absorbers 2 and 3, whereby the hydraulic fluid flows between the upper and lower oil chambers. Further, at this time, the hydraulic fluid enters and exits the intermediate unit 4 in an amount corresponding to an increase/decrease in the volume of the piston rod 11 in the cylinder body 5, causing the free piston 23 to move. For example, when the hydraulic fluid flows out from each of the right and left hydraulic chambers 2 and 3, the hydraulic fluid flows into the intermediate unit 4 from each of the first and second hydraulic oil pipe mounting portions 13 and 15, causing the free piston 23 to move rightwards in FIG. 4. The operation of the free piston 23 at this time is the same irrespective of whether the on/off valve 30 is in the open or closed state.

When a change in the volume of the first oil chamber 44 and a change in the volume of the second oil chamber 45 are equal to each other as described above, in other words, when the amount of hydraulic fluid entering and exiting the first oil chamber 44 and the amount of hydraulic fluid entering and exiting the second oil chamber 45 are in balance with each other, the hydraulic fluid does not pass through the first to third throttles 29, 31, and 56.
That is, when the phases of the operations of the right and left hydraulic shock absorbers 2 and 3 are the same, the damping force is generated solely by the hydraulic fluid passing through the throttle 10 in each of the hydraulic shock absorbers 2 and 3.

On the other hand, when the right and left hydraulic shock absorbers 2 and 3 actuate in the opposite directions, the amount of hydraulic fluid entering and exiting the first oil chamber 44 of the intermediate unit 4 and the amount of hydraulic fluid entering and exiting the second oil chamber 45 are not in balance with each other. A difference occurs between the hydraulic pressure in the first oil chamber 44 and the hydraulic pressure in the second oil chamber 45. For example, when the hydraulic shock absorber 2 on the right side of the vehicle body undergoes compression and the hydraulic shock absorber 3 on the left side of the vehicle body undergoes expansion, the hydraulic pressure of the first oil chamber 44 becomes higher than the hydraulic pressure of the second oil chamber 45. Now, first, the operation when the on/off valve 30 is closed will be described.

In the state where the on/off valve 30 is closed, the hydraulic fluid cannot enter or exit the bypass passage 52 having the second hydraulic fluid passage 28, so the first throttle 29 and the second throttle 31 cannot function.
When, in the state where the on/off valve 30 is closed, the right and left shock absorbers 2 and 3 actuate in opposite directions, and a difference occurs between the hydraulic pressure of the first oil chamber 44 and the hydraulic pressure of the second oil chamber 45, a hydraulic pressure corresponding to the pressure difference between the two oil chambers 44 and 45 is exerted on the third throttle 56 of the small-diameter piston 46.

In this case, the hydraulic pressure is exerted on the first check valve 59, which opens and closes the first communication passage 57 of the small-diameter piston 46, from the first oil chamber 44 side via the first communication passage 57 so as to force the first check valve 59 to open. At this time, the degree of pressure increase is adjusted by a small amount of hydraulic fluid passing through the cutout 64 provided in the first check valve 59, and the first check valve 59 opens when the hydraulic pressure exceeds the initial set load of the first check valve 59. The opening of the first check valve 59 allows the hydraulic fluid to pass through the third throttle 56 of the small-diameter piston 46.

By the hydraulic fluid thus passing through the third throttle 56, a damping force is generated not only in the throttle 10 of each of the two hydraulic shock absorbers 2 and 3 but also in the intermediate unit 4. In the case where the slanting direction of the vehicle body is opposite to the direction described above, a damping force is generated when the second check valve 60 for opening and closing the second communication passage 58 opens and thus the hydraulic fluid flows from the second oil chamber 45 into the first oil chamber 44 through the second communication passage 58.

In the state where the on/off valve 30 is open, the first oil chamber 44 and the second oil chamber 45 are communicated with each other by the bypass passage 52 (composed of the second hydraulic fluid passage 28, the first and second throttles 29 and 31, and the on/off valve 30). In this state, when, for example, the hydraulic pressure in the first oil chamber 44 becomes higher than the hydraulic pressure in the second oil chamber 45, the hydraulic fluid passes through the first to third throttles 29, 31, and 56, thus flowing from the first oil chamber 44 into the second oil chamber 45.

That is, in the state where the on/off valve 30 is open, the hydraulic fluid passes through the throttles provided at three locations. Accordingly, provided that the magnitude of the differential pressure between the two oil chambers is the same, the generated damping force becomes small as compared with the case where the on/off valve 30 is closed. FIG. 8 shows changes in the damping force and differential pressure that occur in the intermediate unit 4. In FIG. 8, the vertical axis represents damping force, and the horizontal axis represents piston speed. The word "piston speed" as used herein refers to the speed of the other piston 6 relative to the speed of the piston 6 of one of the right and left hydraulic shock absorbers 2 and 3. The value of the piston speed becomes zero when the two pistons 6 move in the same direction at the same speed. Further, in FIG. 8, a change in damping force when the on/off valve 30 is closed is indicated by the solid line, and a change in damping force when the on/off valve 30 is opened is indicated by the two-dot chain line.

As indicated by the solid line in FIG. 8, in the region indicated by symbol A with the on/off valve 30 being closed, the amount of hydraulic fluid passing through the cutout 64 of the third throttle 56 increases in accordance with an increase in piston speed, causing a rapid increase in damping force. Then, when the piston speed further increases, and the hydraulic pressure exceeds the initial set load of the check valve, the first check valve 59 or the second check valve 60 opens so that a transition to the region indicated by symbol B and exhibiting more gentle damping characteristics takes place, whereby the damping force increases substantially in proportion to an increase in the elastic force of the leaf springs (valve members 63) .

On the other hand, as indicated by the two-dot chain line in FIG. 8, in the region indicated by symbol (a) with the on/off valve 30 being open, as the piston speed increases, the amount of hydraulic fluid passing through the cutout 64 and the first and second throttles 29 and 31 increases, and the rate of increase in damping force at this time is small as compared with the case where the on/off valve 30 is closed. Then, when the piston speed further increases, and, in the same manner as described above, the first check valve 59 or the second check valve 60 opens to cause a transition to the region indicated by symbol (b), the damping force increases substantially in proportion to an increase in the elastic force of the leaf springs (valve members 63) as in the case where the on/off valve 30 is closed.

Accordingly, in the hydraulic shock absorber system 1 for a vehicle according to this embodiment, the first and second throttles 29 and 31, and the on/off valve 30 are provided in the bypass passage 52 communicating between the first oil chamber 44 and second oil chamber 45 of the intermediate unit 4, whereby the magnitude of the damping force generated in the intermediate unit 4 can be increased/decreased by switching between the open and closed states of the on/off valve 30. That is, with the hydraulic shock absorber system 1 for a vehicle as described above, the damping force can be changed by means of a simple structure as compared with the case where the damping force is adjusted by using a spool valve, thereby making it possible to achieve a reduction in manufacturing cost.

Further, in the hydraulic shock absorber system 1 for a vehicle as described above, projecting portions such as the solenoid mounting portion 24, the hydraulic oil pipe mounting portions 13 and 15, and the bosses 25 and 25 for mounting on the vehicle body frame are provided to the small-diameter cylinder body 21 by casting. Therefore, the small-diameter cylinder body 21 can be easily formed as compared with the case where these components are formed as separate components, such as when they are welded onto the small-diameter cylinder body 21.

Furthermore, the projecting portions are arranged on the parting plane of the casting for the small-diameter cylinder body 21, thereby achieving good castability of the small-diameter cylinder body 21 as compared with the case where the plurality of projecting portions are arranged so as to be, for example, radially scattered in the circumferential direction of the small-diameter cylinder body 21. Moreover, this construction allows the small-diameter cylinder body 21 to be formed compact in the parting direction (the lateral direction in FIG. 3) of the castingmold. Therefore, by mounting the intermediate unit 4 to the vehicle body frame 65 in the state where the mounting bosses 25 and 26 extend upwards and downwards, respectively, and the axes of the small-diameter cylinder body 21 and large-diameter cylinder body 22 are oriented in the longitudinal direction of the vehicle body, the space occupied by the intermediate unit 4 is reduced with respect to the vehicle width direction.
Therefore, the hydraulic shock absorber system 1 for a vehicle according to this embodiment enables a further reduction in the size and cost of the small-diameter cylinder body 21 while being equipped with the mechanism for adjusting the magnitude of the damping force.

Further, in the hydraulic shock absorber system 1 for a vehicle according to this embodiment, the first throttle 29 and the second throttle 31 are provided in series in the bypass passage 52. When the hydraulic fluid flows in the bypass passage 52, the hydraulic fluid repeatedly undergoes expansion and compression, whereby the pressure loss becomes large as compared with the case where only one throttle is provided. Accordingly, with the hydraulic shock absorber system 1 for a vehicle according to this embodiment, a damping force equivalent to that attained when a single throttle with a relatively small bore diameter is used can be generated while using the first throttles 29 and 31 whose bore diameters are relatively large. Since the manufacturing cost generally becomes higher as the bore diameter becomes smaller, a further reduction in cost can be achieved by adopting the construction according to this embodiment.
Further, a damping force of a requisite magnitude can be generated using throttles whose bore diameters are large enough to prevent their clogging with fine foreign matters contained in the hydraulic fluid, whereby a hydraulic shock absorber system with high reliability can be manufactured.

In addition, in the intermediate unit 4 of the hydraulic shock absorber system 1 for a vehicle according to this embodiment, the large-diameter cylinder body 22 is attached to one end portion of the small-diameter cylinder body 21, and the on/off valve driving solenoid 32 is provided to the other end portion thereof, whereby the center of gravity of the intermediate unit 4 can be located in proximity to the mounting bosses 25 and 26 of the small-diameter cylinder body 21. Accordingly, weight balancing can be readily accomplished in mounting the intermediate unit 4 to the vehicle body frame 65 so as to extend horizontally, thereby allowing the mounting bosses 25 and 26 to be formed small. Further, the solenoid 32 according to this embodiment is slanted with respect to the axis of the small-diameter cylinder body 21, whereby the size of the intermediate unit 4 as equipped with the solenoid 32 can be made compact as compared with the case where the solenoid 32 projects along the axial direction from one end portion of the small-diameter cylinder body 21.

It should be noted that in providing the bypass passage 52 with the throttles, in addition to the above-described arrangement, a plurality of throttles can be arranged in series in the second hydraulic fluid passage 28, or a plurality of throttles can be arranged in series between the on/off valve 30 and the first oil chamber 44. In the case where the plurality of throttles are provided in the second hydraulic fluid passage 28, they are provided on the first oil chamber 44 side (on the on/off valve 30 side) with respect to the connecting portion with the first hydraulic fluid passage 27. In this case, the second throttle 31 may be provided between the on/off valve 30 and the first oil chamber 44. Further, in providing the throttles in series, an expansion chamber with a relatively large inner diameter is provided between adjacent small-diameter bores of the respective throttles.

While the above-described embodiment is directed to the case where the first oil chamber 44 and second oil chamber 45 of the intermediate unit 4 are connected to the respective lower oil chambers 8 of the hydraulic shock absorbers 2 and 3, the first and second oil chambers 44 and 45 can be connected to the respective upper oil chambers 7 of the hydraulic shock absorbers 2 and 3.
While in the above-described embodiment the hydraulic shock absorber system 1 is constructed such that changes in the volumes of the first and second oil chambers 44 and 45 coincide with each other at all times, the changes in the volumes of these chambers can be set to be at a fixed ratio at all times depending on the characteristics of hydraulic shock absorbers on the wheel side.

Further, other than being connected to the right and left hydraulic shock absorbers 2 and 3, the first and second oil chambers 44 and 45 can be connected to front-wheel hydraulic shock absorbers and rear-wheel hydraulic shock absorbers that are located on one side with respect to the lateral direction of the vehicle body. Alternatively, as shown in FIG. 9, the first and second oil chambers 44 and 45 can be connected to front-wheel hydraulic shock absorbers 2a and rear-wheel hydraulic shock absorbers 3a that are located on one and the other sides with respect to the lateral direction, respectively. In the example shown in FIG. 9, two hydraulic shock absorber systems 1 are used. The respective intermediate units 4 of the two hydraulic shock absorber systems 1 are mounted at positions located on the longitudinally central portion of the vehicle body and on the opposite side portions with respect to the vehicle width direction in the state where the axes thereof are oriented in the longitudinal direction and the solenoid 32 is oriented diagonally upward and frontward as shown in FIG. 4.

Further, in addition to be effected by means of a switch operated by the occupant, the switching between the energized and non-energized states of the on/off valve driving solenoid 32 may also be effected automatically according to the traveling condition or riding state of the occupant.

### Industrial Applicability

The present invention is applicable to passenger vehicles such as an automobile.

## Claims

1. A hydraulic shock absorber system for a vehicle, in which a small-diameter cylinder body and a large-diameter cylinder body are connected to each other so that their respective cylinder bores become coaxial with each other, a small-diameter piston and a large-diameter piston are located inside the respective cylinder bores, the small-diameter piston and the large-diameter piston are formed integrally so as to be operatively coupled to each other to form a free piston, a first oil chamber, a second oil chamber, and a high pressure are respectively defined on one side of the small-diameter piston inside the cylinder bore of the small-diameter cylinder, between the small-diameter piston and the large-diameter piston, and the other side of the large-diameter piston, changes in volume of the first oil chamber and of the second oil chamber in accordance with movement of the free piston are made to be at a fixed ratio at all times, the first oil chamber and the second oil chamber are communicated with each other by a throttle provided in the small-diameter piston, the first oil chamber is communicated with an oil chamber of one of a pair of hydraulic shock absorbers provided to a vehicle body, and the second oil chamber is communicated with an oil chamber of the other of the shock absorbers, wherein:
a bypass passage communicating between the first oil chamber and the second oil chamber is provided in the small-diameter cylinder body;
an on/off valve, which is opened and closed by a solenoid, and a throttle are provided in series in the bypass passage;
the small-diameter cylinder body is formed by a casting mold that is subjected to mold release in a radial direction thereof; and
in the small-diameter cylinder body, a solenoid mounting portion for mounting the solenoid, a hydraulic oil pipe mounting portion for mounting a hydraulic oil pipe that connects the first oil chamber and the second oil chamber to the hydraulic shock absorbers, and a boss for mounting the small-diameter cylinder body on a vehicle frame side are arranged on a parting plane of the casting mold.

2. The hydraulic shock absorber system for a vehicle according to Claim 1, wherein a plurality of the throttles are provided in series in the bypass passage.

3. The hydraulic shock absorber system for a vehicle according to Claim 1, wherein the throttle is formed by a hole that is opened and closed by a valve member of the on/off valve.

4. The hydraulic shock absorber system for a vehicle according to Claim 1, wherein:
the solenoid mounting portion protrudes from the small-diameter cylinder body in a shape of a bottomed cylinder of a small height, and has a valve seat and a throttle that are provided on a bottom wall thereof; and
one end portion of the solenoid is mounted to the solenoid mounting portion.

5. The hydraulic shock absorber system for a vehicle according to Claim 1, wherein the solenoid is slanted with respect to an axis of the small-diameter cylinder body.
